# FASCICULE DE BREVET EUROPEEN

(11) **EP 2 775 245 B1**
(45) Date de publication et mention de la délivrance du brevet: **25.05.2016**
(21) Numéro de dépôt: 14157768.4
(22) Date de dépôt: 05.03.2014
(51) Int. Cl.: F28F 3/10, F28F 3/08, F28D 1/047, F28D 20/00, F24F 12/00, F24D 11/00

(54) **Dispositif de stockage d'énergie thermique**
Vorrichtung zur Speicherung von Wärmeenergie
Device for storing thermal energy

(30) Priorité: 07.03.2013 FR 1300506; 21.05.2013 FR 1301153; 18.10.2013 FR 1302414; 20.12.2013 FR 1303020
(43) Date de publication de la demande: 10.09.2014
(73) Titulaire: Vendeirinho, David, 38850 Charavines (FR)
(72) Inventeur: Vendeirinho, David, 38850 Charavines (FR)
(74) Mandataire: Thibon, Laurent

(56) Documents cités:
- WO-A1-2010/060524
- DE-A1- 19 826 625
- DE-A1-102004 052 447
- GB-A- 2 459 955
- US-A1- 2012 152 488

## Description

### Domaine

La présente demande concerne un dispositif de stockage d'énergie thermique comprenant des accumulateurs de chaleur et un dispositif de chauffage, notamment un dispositif de chauffage d'un logement individuel ou collectif, utilisant le dispositif de stockage.

### Exposé de l'art antérieur

L'utilisation d'accumulateurs de chaleur pour le chauffage d'une habitation est connue. Les documents DE 10330139 et US 2003/0000680 décrivent des exemples de tels dispositifs de chauffage.

Un inconvénient des dispositifs de chauffage connus comprenant des accumulateurs de chaleur est la faible puissance de chauffage pouvant être atteinte. De ce fait, de tels dispositifs de chauffage ne sont généralement utilisés que comme chauffage d'appoint.

Les documents US 2012/0152488 et WO 2010/060524 décrivent des dispositifs de stockage et captage d'énergie thermique.

### Résumé

Un objet d'un mode de réalisation est de pallier tout ou partie des inconvénients des dispositifs de chauffage décrits précédemment.

Un autre objet d'un mode de réalisation est que la quantité d'énergie thermique stockée par le dispositif de stockage est importante.

Un autre objet d'un mode de réalisation est que l'énergie consommée pour le stockage d'énergie thermique dans le dispositif de stockage d'énergie thermique est réduite.

Un autre objet d'un mode de réalisation est que le volume des accumulateurs de chaleur du dispositif de stockage d'énergie thermique est faible.

Selon l'invention le dispositif de chauffage comprenant un premier et un deuxième accumulateur de chaleur comportant chacun des caissons de stockage d'énergie thermique, chaque caisson comprenant une enceinte isolante contenant de la terre traversée par au moins une première conduite de circulation d'un premier fluide caloporteur et au moins une deuxième conduite de circulation d'un deuxième fluide caloporteur, la première conduite comprenant une première extrémité et une deuxième extrémité, les deuxièmes conduites des caissons du premier accumulateur étant connectées en série et les deuxièmes conduites des caissons du deuxième accumulateur étant connectées en série, le dispositif de chauffage comprenant un dispositif de fourniture d'énergie thermique au premier fluide caloporteur relié aux premier et deuxième accumulateurs par un premier circuit de distribution du premier fluide caloporteur comprenant des premier et deuxième éléments de fourniture du premier fluide caloporteur et des premier et deuxième éléments de réception du premier fluide caloporteur, les premières extrémités des premières conduites des caissons du premier accumulateur étant reliées en parallèle au premier élément de fourniture du premier fluide caloporteur, les deuxièmes extrémités des premières conduites des caissons du premier accumulateur étant reliées en parallèle au premier élément de réception du premier fluide caloporteur, les premières extrémités des premières conduites du deuxième accumulateur étant reliées en parallèle au deuxième élément de fourniture du premier fluide caloporteur et les deuxièmes conduites du deuxième accumulateur étant reliées en parallèle au deuxième élément de réception du premier fluide caloporteur, le premier circuit de distribution étant adapté à faire circuler de façon sélective le premier fluide caloporteur dans la première conduite de chaque caisson du premier accumulateur ou dans la première conduite de chaque caisson du deuxième accumulateur.

Selon un mode de réalisation, le dispositif comprend un dispositif de consommation d'énergie thermique du deuxième fluide caloporteur relié aux premier et deuxième accumulateurs par un deuxième circuit de distribution du deuxième fluide caloporteur adapté à faire circuler de façon sélective le deuxième fluide caloporteur dans la deuxième conduite de chaque caisson du premier accumulateur ou dans la deuxième conduite de chaque caisson du deuxième accumulateur.

Selon un mode de réalisation, dans chaque caisson, la première conduite est agencée pour que le premier fluide caloporteur circule dans l'enceinte selon un premier parcours et la deuxième conduite est agencée pour que le deuxième fluide caloporteur circule dans l'enceinte selon un deuxième parcours opposé au premier parcours.

Selon un mode de réalisation, chaque caisson occupe un volume inférieur à 5 m³.

Selon un mode de réalisation, chaque caisson comprend une armature comprenant des tiges de support de la première conduite et de la deuxième conduite orientées radialement.

Selon un mode de réalisation, l'armature comprend un tube délimitant dans l'enceinte un volume central de terre et un volume périphérique de terre, la première conduite s'étendant majoritairement successivement dans le volume central et dans le volume périphérique et la deuxième conduite s'étendant majoritairement successivement dans le volume périphérique et dans le volume central.

Selon un mode de réalisation, pour chaque caisson, la première conduite et/ou la deuxième conduite est au moins en partie disposée en spirale dans l'enceinte.

Selon un mode de réalisation, le dispositif de fourniture d'énergie thermique au premier fluide caloporteur comprend un chauffe-eau.

Selon un mode de réalisation, le dispositif de consommation d'énergie thermique du deuxième fluide caloporteur comprend un conduit de circulation d'air et un échangeur de chaleur, entre le deuxième fluide caloporteur et l'air entraîné dans le conduit de circulation d'air relié au deuxième circuit de distribution.

Selon un mode de réalisation, le dispositif de consommation d'énergie thermique comprend un circuit d'aération à ventilation double-flux destiné à équiper une habitation et comprenant un premier bloc de ventilation adapté à aspirer de l'air depuis l'extérieur de l'habitation vers l'intérieur de l'habitation par ledit conduit et un deuxième bloc de ventilation adapté à aspirer de l'air depuis l'intérieur de l'habitation vers l'extérieur de l'habitation et un échangeur de chaleur air-air entre l'air aspiré par le premier bloc de ventilation et l'air aspiré par le deuxième bloc de ventilation, l'échangeur de chaleur entre le deuxième fluide caloporteur et l'air entraîné dans ledit conduit étant placé en aval du premier bloc de ventilation selon le sens de circulation de l'air dans ledit conduit.

Selon un mode de réalisation, le deuxième circuit de distribution comprend un circulateur hydraulique de mise en circulation du deuxième fluide caloporteur dans le deuxième circuit de distribution et un programmateur adapté à commander le circulateur hydraulique et relié à un thermostat adapté à mesurer la température dans l'habitation.

Selon l'invention, le dispositif de chauffage comprend la mise en circulation de façon sélective du premier fluide caloporteur dans la première conduite de chaque caisson du premier accumulateur ou dans la première conduite de chaque caisson du deuxième accumulateur.

Selon un mode de réalisation, le procédé de commande du dispositif de chauffage comprend la mise en circulation du deuxième fluide caloporteur seulement dans le premier accumulateur lorsque le premier fluide caloporteur est mis en circulation seulement dans le deuxième accumulateur et la mise en circulation du deuxième fluide caloporteur seulement dans le deuxième accumulateur lorsque le premier fluide caloporteur est mis en circulation seulement dans le premier accumulateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un mode de réalisation d'un dispositif de chauffage ;
la figure 2 est une coupe latérale, partielle et schématique, d'une habitation comprenant le dispositif de chauffage selon le mode de réalisation représenté en figure 1 ;
les figures 3 et 4 sont respectivement une vue de côté avec coupe et une vue de dessus avec coupe d'un mode de réalisation d'un caisson de stockage d'énergie thermique ;
la figure 5 est une vue de côté avec coupe d'un autre mode de réalisation d'un caisson de stockage d'énergie thermique ;
les figures 6 et 7 sont des vues schématiques de dessus avec coupe du caisson de stockage d'énergie thermique représenté en figure 5 illustrant un mode de réalisation de l'agencement de conduites dans le caisson ;
la figure 8 représente, de façon partielle et schématique, un mode de réalisation d'un dispositif de production d'énergie thermique du dispositif de chauffage de la figure 1 ;
la figure 9 représente, de façon partielle et schématique, un mode de réalisation d'un dispositif de consommation d'énergie thermique du dispositif de chauffage de la figure 1 ; et
la figure 10 est une coupe latérale, partielle et schématique, d'une habitation comprenant un autre mode de réalisation du dispositif de chauffage.

### Description détaillée

Par souci de clarté, de mêmes éléments ont été désignés par de mêmes références aux différentes figures et, de plus, les diverses figures ne sont pas tracées à l'échelle. En outre, dans la suite de la description, les expressions "sensiblement", "environ" et "approximativement" signifient "à 10 % près". De plus, seuls les éléments nécessaires à la compréhension de l'invention seront décrits et représentés sur les figures. En particulier, la structure et le fonctionnement d'un chauffe-eau solaire et d'une ventilation à double-flux sont bien connus d'un homme du métier et ne sont pas décrits en détail.

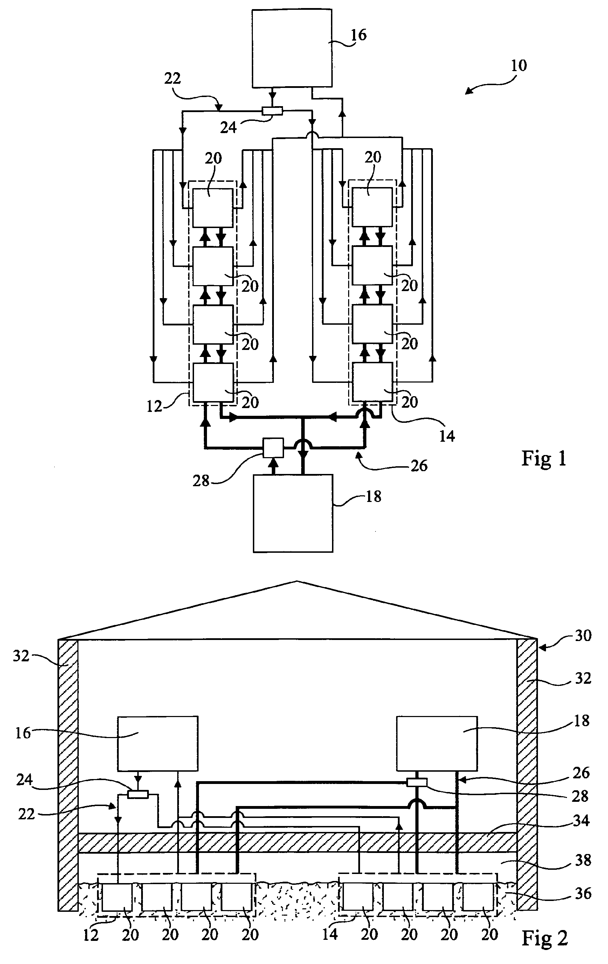

La figure 1 représente, de façon partielle et schématique, un mode de réalisation d'un dispositif de chauffage 10.

Le dispositif de chauffage 10 comprend deux accumulateurs d'énergie thermique 12, 14, un dispositif 16 de production d'énergie thermique alimentant les accumulateurs de chaleur 12, 14 et un dispositif 18 de consommation de l'énergie thermique stockée dans les accumulateurs 12, 14. Le dispositif 16 de production d'énergie thermique et les accumulateurs 12, 14 forment un dispositif de stockage d'énergie thermique.

Le dispositif 16 de production d'énergie thermique peut correspondre à tout type de dispositif adapté à fournir un premier fluide caloporteur à haute température. Selon un mode de réalisation, le dispositif 16 de production d'énergie thermique comprend un chauffe-eau pour le chauffage du premier fluide caloporteur, notamment un chauffe-eau solaire dans lequel le chauffe-eau est relié à des capteurs solaires ou un chauffe-eau thermodynamique dans lequel le chauffe-eau est relié à une pompe à chaleur. Selon un autre mode de réalisation, le dispositif 16 de production d'énergie thermique comprend des capteurs solaires adaptés à chauffer directement le premier fluide caloporteur. Une partie de l'énergie thermique du premier fluide caloporteur fourni par le dispositif 16 est stockée dans les accumulateurs de chaleur 12, 14.

Le dispositif 18 de consommation d'énergie thermique peut correspondre à tout type de dispositif dont le fonctionnement requiert un deuxième fluide caloporteur à haute température. Selon un mode de réalisation, le dispositif 18 comprend une ventilation double-flux, le deuxième fluide caloporteur étant utilisé pour chauffer l'air extérieur aspiré par la ventilation. Selon un autre mode de réalisation, le dispositif de consommation d'énergie thermique 18 comprend un dispositif de chauffage au sol, notamment par mise en circulation du deuxième fluide caloporteur dans un plancher. Une partie de l'énergie thermique stockée dans les accumulateurs de chaleur 12, 14 est utilisée pour chauffer le deuxième fluide caloporteur utilisé par le dispositif 18 de consommation.

La température du premier fluide caloporteur fourni par le dispositif 16 de production d'énergie thermique et la température du deuxième fluide caloporteur reçu par le dispositif 18 de consommation d'énergie thermique dépendent notamment de l'application prévue. A titre d'exemple, dans le cas où le dispositif 18 de consommation d'énergie thermique comprend une ventilation double-flux, la température des premier et deuxième fluides caloporteurs peut être supérieure à 50°C, notamment d'environ 70°C. A titre d'exemple, dans le cas où le dispositif 18 de consommation d'énergie thermique comprend un dispositif de chauffage au sol, la température des premier et deuxième fluides caloporteurs peut être comprise entre 30°C et 40°C. De façon générale, la température des premier et deuxième fluides caloporteurs est comprise entre 30°C et 80°C.

Chaque accumulateur de chaleur 12, 14 comprend plusieurs accumulateurs de chaleur élémentaires 20, appelés caissons dans la suite de la description. Chaque caisson 20 occupe un volume inférieur à 5 m³, de préférence compris entre 1 m³ et 5 m³, plus préférentiellement entre 2 m³ et 3 m³. Le nombre de caissons 20 par accumulateur 12, 14 dépend de la capacité calorifique totale souhaitée. A titre d'exemple, chaque accumulateur 12, 14 peut comprendre de 2 à 10 caissons, quatre caissons 20 par accumulateur 12, 14 étant représentés à titre d'exemple en figure 1.

Le dispositif 16 de production d'énergie thermique est relié aux caissons 20 par un circuit de distribution 22 du premier fluide caloporteur chauffé par le dispositif 16. Le premier fluide caloporteur transporté par le circuit de distribution 22 est, par exemple, un liquide caloporteur, notamment de l'eau ou du glycol. Les conduites du circuit de distribution 22 sont représentées en traits fins sur les figures. De préférence, le premier fluide caloporteur est, pour chaque accumulateur 12, 14, distribué en parallèle à chaque caisson 20 de l'accumulateur. Ceci permet de façon avantageuse de renouveler rapidement la quantité d'énergie thermique stockée dans chaque caisson 20 étant donné que chaque caisson a un volume réduit.

Le circuit de distribution 22 comprend un sélecteur 24, par exemple un bipasse, adapté à diriger de façon sélective le premier fluide caloporteur à haute température fourni par le dispositif 16 à l'un ou l'autre des accumulateurs 12 ou 14. Ceci permet avantageusement de réaliser une étape de stockage d'énergie thermique seulement dans l'un des deux accumulateurs 12 ou 14.

Le dispositif 18 de consommation d'énergie thermique est relié aux caissons 20 par un circuit 26 de distribution du deuxième fluide caloporteur utilisé par le dispositif 18. Le deuxième fluide caloporteur transporté par le circuit de distribution 26 est, par exemple, un liquide caloporteur, notamment de l'eau ou du glycol. Les conduites du circuit de distribution 26 sont représentées en traits épais sur les figures. De préférence, le circuit de distribution 26 relie, pour chaque accumulateur 12, 14, les caissons 20 de l'accumulateur en série, c'est-à-dire que le deuxième fluide caloporteur traverse successivement chaque caisson 20 d'un accumulateur 12 ou 14 avant de retourner au dispositif 18. Ceci permet de façon avantageuse d'assurer un chauffage convenable du deuxième fluide caloporteur. Dans le mode de réalisation représenté en figure 1, le deuxième fluide caloporteur traverse, pour chaque accumulateur 12, 14, successivement deux fois chaque caisson 20 de l'accumulateur, une première fois du bas vers le haut de la figure puis une deuxième fois du haut vers le bas de la figure. A titre de variante, le deuxième fluide caloporteur peut traverser, pour chaque accumulateur 12, 14, une seule fois successivement chaque caisson 20 de l'accumulateur.

Le circuit de distribution 26 comprend un sélecteur 28, par exemple un bipasse, adapté à diriger de façon sélective le deuxième fluide caloporteur utilisé par le dispositif 18 vers l'un ou l'autre des accumulateurs 12 ou 14. Ceci permet avantageusement de prélever de l'énergie thermique seulement de l'un des deux accumulateurs 12 ou 14.

Le fonctionnement des dispositifs 16, 18 et des sélecteurs 24, 28 peut être commandé de façon automatique ou manuelle. De façon avantageuse, le premier fluide caloporteur du circuit de distribution 22 est mis en circulation dans l'un des accumulateurs 12 ou 14 lorsque le deuxième fluide caloporteur du circuit de distribution 26 est mis en circulation dans l'autre accumulateur 12 ou 14. De façon avantageuse, il est ainsi évité que le premier fluide caloporteur du circuit de distribution 22 et le deuxième fluide caloporteur du circuit de distribution 26 circulent simultanément dans les caissons 20 du même accumulateur 12 ou 14.

Selon un autre mode de réalisation, le dispositif de chauffage 10 peut comprendre plus de deux accumulateurs de chaleur 12, 14. Dans ce cas, les circuits de distribution 22 et 26 sont reliés à chaque accumulateur, les caissons de chaque accumulateur étant montés en parallèle sur le circuit de distribution 22 et étant montés en série sur le circuit de distribution 26.

Dans le mode de réalisation représenté en figure 1, un seul circuit de distribution 26 est représenté. Toutefois, selon un autre mode de réalisation, plusieurs dispositifs de consommation d'énergie thermique 18 peuvent être présents et reliés aux accumulateurs 12 et 14 par des circuits de distribution 26 indépendants.

La figure 2 représente un exemple d'installation du dispositif de chauffage 10 dans une habitation 30. Les circuits de distribution 22 et 26 ne sont que partiellement représentés. Selon un mode de réalisation, l'habitation 30 comprend des murs 32 et un plancher 34. Selon un mode de réalisation, les caissons 20 des accumulateurs 12 et 14 sont enterrés dans le sol 36 sous le plancher 34. A titre d'exemple, l'extrémité supérieure de chaque caisson 20 peut affleurer la surface du sol 36 pour faciliter l'accès aux caissons 20. Les conduites des circuits de distribution 22, 26 sont, de préférence, isolées en dehors des caissons 20, par exemple par des gaines isolantes.

Selon un mode de réalisation, un espace 38 libre est présent entre le sol 36 et le plancher 34. Cet espace 38 correspond, par exemple, à un vide sanitaire ou à un sous-sol. Il permet d'accéder facilement aux caissons 20, notamment pour leur installation et pour des opérations de maintenance. A titre de variante, les caissons 20 des accumulateurs 12, 14 peuvent être disposés dans l'espace 38 et reposer sur le sol 36. Selon un autre mode de réalisation, les caissons 20 des accumulateurs 12 et 14 peuvent être enterrés à côté de l'habitation 30.

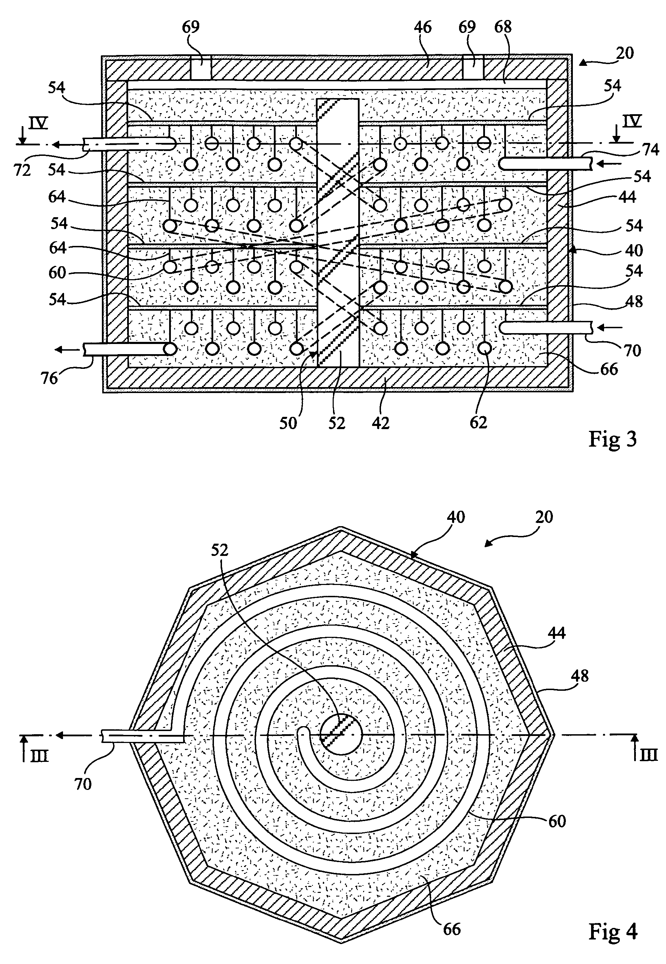

Les figures 3 et 4 sont des coupes d'un mode de réalisation d'un caisson 20. Selon un mode de réalisation, le volume occupé par le caisson 20 est inscrit dans un cylindre dont la hauteur est inférieure ou égale à 110 cm et dont le diamètre est inférieur ou égal à 170 cm. Le caisson 20 comprend une enceinte 40 comprenant un fond 42, des parois latérales 44 et un couvercle 46 formés par des plaques en matériau isolant thermiquement, par exemple des plaques de polystyrène ayant une épaisseur supérieure ou égale à 4 cm. Le couvercle 46, situé au sommet du caisson 20, peut être amovible et permettre l'accès au volume interne du caisson 20. L'enceinte 40 peut être contenue dans une enveloppe 48 en un matériau étanche, par exemple un film plastique. L'enveloppe 48 protège le caisson 20 contre les risques de pénétration d'eau.

Le caisson 20 comprend une armature 50 comportant, par exemple, un pilier central 52, par exemple cylindrique, en un matériau isolant, et des tiges 54 rigides qui s'étendent radialement depuis le pilier central 52. Le pilier central 52 a, par exemple, une hauteur inférieure ou égale à 80 cm. Les tiges 54 sont, par exemple, en acier et ont un diamètre inférieur ou égal à 1,5 cm. Les parois latérales 44 de l'enceinte 40 peuvent être maintenues par les tiges 54 qui peuvent pénétrer dans les plaques formant ces parois 44.

Chaque caisson 20 est traversé par une conduite 60 de transport du premier fluide caloporteur faisant partie du circuit de distribution 22, et appelée conduite 60 de fourniture d'énergie thermique dans la suite de la description. La conduite 60 est représentée en traits fins sur les figures. Chaque caisson 20 est, en outre, traversé par une conduite 62 de transport du deuxième fluide caloporteur faisant partie du circuit de distribution 26, et appelée conduite 62 de captage d'énergie thermique dans la suite de la description. La conduite 62 est représentée en traits épais sur les figures. Les conduites 60 et 62 sont maintenues par les tiges 54, par exemple par des baguettes de fixation 64. De préférence, les conduites 60 et 62 sont placées à moins de 5 cm d'une tige 54. A titre d'exemple, les conduites 60, 62 sont en inox et peuvent avoir un diamètre interne compris entre 10 mm et 5 cm.

De la terre 66 est disposée dans l'enceinte 40 de façon à recouvrir l'ensemble des conduites 60 et 62. La terre 66 est de préférence criblée, par exemple avec un tamis ayant une ouverture comprise entre 5 mm et 20 mm, par exemple d'environ 10 mm. Le volume de terre 66 contenu dans le caisson 20 forme une zone de stockage d'énergie thermique. Un espace 68 rempli d'air peut être prévu entre la terre 66 et le couvercle 46. A titre d'exemple, la hauteur de l'espace rempli d'air 68 peut être de l'ordre de 5 cm. Des ouvertures 69 peuvent être prévues traversant l'enveloppe 48 et le couvercle 46 et communiquant avec l'espace rempli d'air 68. L'espace rempli d'air 68 communiquant avec l'extérieur par les ouvertures 69, la pression dans l'espace 68 reste, de façon avantageuse, égale à la pression à l'extérieur des caissons 20.

De préférence, les conduites 60 et 62 sont disposées dans l'enceinte 40 de façon à être réparties sensiblement régulièrement dans l'enceinte 40. Selon le présent mode de réalisation, la conduite 60 s'étend sur plusieurs étages, par exemple quatre étages sensiblement horizontaux. Sur chaque étage, la conduite 60 s'étend en spirale autour du pilier central 52 et la spirale est reliée, à au moins une extrémité, à la spirale d'un autre étage. Selon le présent mode de réalisation, la conduite 62 s'étend sur plusieurs étages, par exemple quatre étages sensiblement horizontaux. Sur chaque étage, la conduite 62 s'étend en spirale autour du pilier central 52 et la spirale est reliée, à au moins une extrémité, à la spirale d'un autre étage. Selon un mode de réalisation, les étages de la conduite 60 sont intercalés avec les étages de la conduite 62.

On a représenté en figure 3, des embouts 70 et 72 respectivement d'arrivée et de sortie de la conduite 60 et des embouts 74 et 76 respectivement d'arrivée et de sortie de la conduite 62. Pour chaque accumulateur 12, 14, les conduites 62 des caissons 20 sont connectées en série, c'est-à-dire que l'embout de sortie 76 de la conduite 62 d'un caisson 20 est connecté à l'embout 74 d'arrivée du caisson suivant et l'embout de sortie 76 du dernier caisson 20 de la série de caissons 20 est relié au reste du circuit de distribution 26. Pour chaque accumulateur 12, 14, les conduites 60 des caissons 20 sont connectées en parallèle, c'est-à-dire qu'une seule conduite du circuit de distribution 22 se divise pour être connectée à chaque embout d'arrivée 70 de la conduite 60 de chaque caisson 20 et qu'une seule conduite du circuit de distribution 22 se divise pour être connectée à chaque embout de sortie 72 de la conduite 60 de chaque caisson 20.

En fonctionnement, lorsque le premier fluide caloporteur circule dans la conduite 60, de l'énergie thermique est cédée du premier fluide caloporteur à la terre 66 et lorsque le deuxième fluide caloporteur circule dans la conduite 62, de l'énergie thermique est transférée de la terre 66 au deuxième fluide caloporteur. Les tiges 55, lorsqu'elles sont en acier, participent également aux transferts de chaleur. Selon un mode de réalisation, en fonctionnement normal, la température dans chaque caisson 20 peut être maintenue sensiblement à la température du premier fluide caloporteur fourni par le dispositif 16 de production d'énergie thermique, et dépend du dispositif 18 de consommation d'énergie thermique utilisé. A titre d'exemple, la température dans chaque caisson 20 est, en fonctionnement normal, comprise entre 30°C et 80°C.

Les conduites 60 et 62 sont disposées dans l'enceinte 40 de façon que le premier fluide caloporteur dans la conduite 60 et le deuxième fluide caloporteur dans la conduite 62 traversent le volume interne du caisson 20 en fonctionnement selon des parcours opposés. A titre d'exemple, le premier fluide caloporteur est transporté par la conduite 60 depuis le bas du caisson 20 vers le haut du caisson 20 et le deuxième fluide caloporteur est transporté par la conduite 62 depuis le haut du caisson 20 vers le bas du caisson 20. A titre de variante, le premier fluide caloporteur est transporté par la conduite 60 du haut du caisson 20 vers le bas du caisson 20 et le deuxième fluide caloporteur est transporté par la conduite 62 du bas du caisson 20 vers le haut du caisson 20.

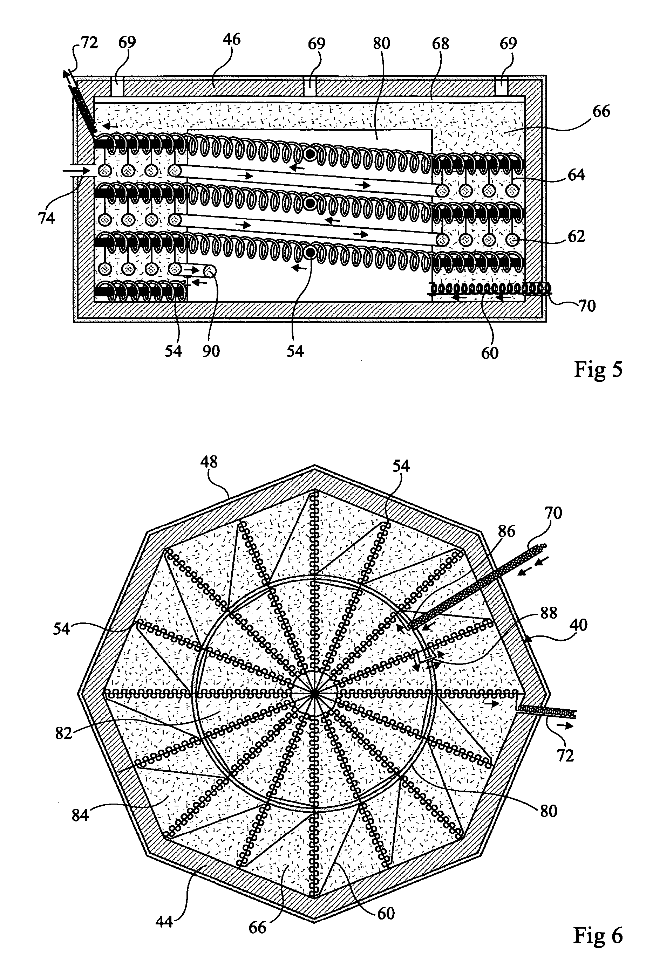

Les figures 5, 6 et 7 représentent un autre mode de réalisation d'un caisson 20. Les éléments communs avec le caisson 20 représenté sur les figures 3 et 4 sont désignés par de mêmes références. Selon le mode de réalisation représenté sur les figures 5, 6 et 7, l'armature 50 comprend, à la place du pilier central 52, un tube 80, en un matériau isolant, par exemple du carton, maintenant les tiges 54. Le tube 80 délimite un volume central 82 et un volume périphérique 84 dans l'enceinte 40, remplis de terre. Les tiges 54 s'étendent à la fois dans le volume central 82 et dans le volume périphérique 84. A titre d'exemple, la partie de chaque tige 54 dans le volume périphérique 82 est inférieure à 30 cm. Le tube 80 a de préférence un diamètre inférieur ou égal à 80 cm et une hauteur inférieure ou égale à 80 cm. Les tiges 55 peuvent être réparties en colimaçon autour du tube 80.

Dans le mode de réalisation illustré sur les figures 5, 6 et 7, la conduite 60 de fourniture d'énergie thermique est disposée dans l'enceinte 40 de façon que le premier fluide caloporteur transporté par cette conduite 60 parcoure d'abord le volume central 82 puis le volume périphérique 84 et la conduite 62 de captage d'énergie thermique est disposée dans l'enceinte 40 de façon que le deuxième fluide caloporteur transporté par cette conduite 62 parcoure d'abord le volume périphérique 80 puis le volume central 82. A titre d'exemple, le premier fluide caloporteur est transporté par la conduite 60 d'abord dans le volume central 82 du bas vers le haut du caisson 20, puis dans le volume périphérique 84 du bas vers le haut et le deuxième fluide caloporteur est transporté par la conduite 62 d'abord dans le volume périphérique 84 du haut vers le bas du caisson 20, puis dans le volume central 82 du haut vers le bas du caisson 20.

Dans le mode de réalisation illustré sur les figures 5, 6 et 7, la conduite 60 de fourniture d'énergie thermique est disposée en hélice autour de chaque tige 54.

La figure 6 est une vue de dessus avec coupe, aplatie et schématique, qui illustre un exemple d'agencement de la conduite 60. Comme cela apparaît sur cette figure, la conduite 60 pénètre dans l'enceinte 40 depuis l'embout 70 et s'étend directement jusqu'au tube 80 qu'elle traverse par un orifice 86 pour pénétrer dans le volume central 82. La conduite 60 parcourt le volume central 82 en suivant une hélice autour de chaque tige 54 puis ressort du volume central 82 par un orifice 88 pour parcourir le volume périphérique 84 en suivant à nouveau une hélice autour de chaque tige 54. La conduite 60 quitte l'enceinte 40 au niveau de l'embout de sortie 72.

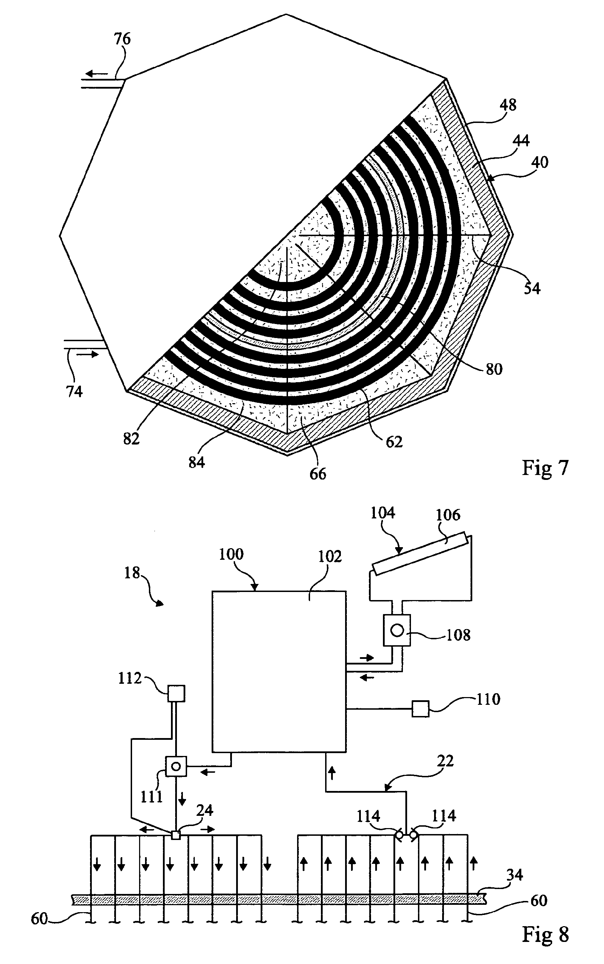

La figure 7 est une vue de dessus avec coupe, aplatie et schématique, qui illustre un exemple d'agencement de la conduite 62. Comme cela apparaît sur cette figure, la conduite 62 pénètre dans l'enceinte 40 depuis l'embout 74 et parcourt le volume périphérique 84 en spirale en se rapprochant du tube 80, éventuellement sur plusieurs étages comme cela apparaît en figure 5, puis traverse le tube 80 par un orifice 90 et parcourt alors le volume central 82, en spirale en s'éloignant du tube 80, éventuellement sur plusieurs étages. La conduite 62 quitte l'enceinte 40 au niveau de l'embout de sortie 76.

En fonctionnement, dans une phase de stockage d'énergie thermique dans un caisson 20, lorsque le premier fluide caloporteur transporté par la conduite 60 atteint le caisson 20, il commence par chauffer le volume central 82. Le premier fluide caloporteur est alors moins chaud quand il atteint le volume périphérique 84. Le volume central 82 peut alors être à une température moyenne plus élevée que le volume périphérique 84. En fonctionnement, dans une phase de captage d'énergie thermique dans un caisson 20, lorsque le deuxième fluide caloporteur transporté par la conduite 62 atteint le caisson 20, il entre dans l'enceinte 40 et commence par capter de l'énergie thermique dans le volume périphérique 84. Le deuxième fluide caloporteur est alors préchauffé dans le volume périphérique 84 avant d'atteindre le volume central 82 pour avoir le chauffage final.

Dans les modes de réalisation décrits précédemment, une seule conduite de captage d'énergie thermique 62 est représentée par le caisson 20. Toutefois, selon un autre mode de réalisation, plusieurs conduites de captage d'énergie thermique peuvent être disposées dans un même caisson 20. Chaque conduite de captage d'énergie thermique fait alors partie d'un circuit de distribution distinct, ces circuits de distribution pouvant être reliés à des dispositifs de consommation d'énergie thermique 18 distincts.

La figure 8 représente un mode de réalisation du dispositif de production d'énergie thermique 18 comprenant un chauffe-eau 100. Le chauffe-eau 100 est de préférence un chauffe-eau solaire. Il comprend un ballon 102 contenant le premier fluide caloporteur et un dispositif 104 de chauffage du premier fluide caloporteur par des capteurs solaires. On a schématiquement représenté en figure 8 un capteur solaire 106 et une pompe 108 de mise en circulation d'un fluide caloporteur chauffé par le capteur solaire 106 et utilisé pour le chauffage du premier fluide caloporteur dans le ballon 102. Le chauffe-eau solaire 100 peut, en outre, comprendre un dispositif de chauffage d'appoint, par exemple un dispositif de chauffage électrique, du premier fluide caloporteur contenu dans le ballon 102. Le fonctionnement du chauffe-eau 100 peut être commandé par un programmateur 110, comprenant par exemple un circuit électronique dédié. Le programmateur 110 peut commander le chauffe-eau pour que la température du premier fluide caloporteur contenu dans le ballon 102 soit maintenue sensiblement égale à une consigne de température.

A titre d'exemple, le programmateur 110 permet de commander le chauffage du premier fluide caloporteur par le dispositif de chauffage électrique d'appoint en fin de journée si le chauffage du premier fluide caloporteur dû aux capteurs solaires 106 n'a pas été suffisant par manque d'ensoleillement. Le premier fluide caloporteur peut être mis en circulation dans le circuit de distribution 22 par une pompe 111 commandée par un programmateur 112 comprenant, par exemple, un circuit électronique dédié. Le programmateur 112 est, en outre, adapté à commander le sélecteur 24 pour diriger le premier fluide caloporteur vers l'accumulateur 12 ou 14, non représenté. En figure 8, on a représenté sur le circuit de distribution 22 en aval des accumulateurs 12 et 14 des clapets anti-retour 114 permettant de guider la circulation du premier fluide caloporteur en aval des accumulateurs 12 et 14 vers le ballon 102.

Selon un mode de réalisation, les programmateurs 110 et 112 sont adaptés à échanger des signaux entre eux. De préférence, lorsque le programmateur 112 commande la mise en circulation du premier fluide caloporteur dans le circuit de distribution 22, le programmateur 110 commande le chauffe-eau 100 pour empêcher la mise en route du dispositif de chauffage électrique même si la température du premier fluide caloporteur dans le ballon 102 diminue en dessous de la consigne de température.

A titre d'exemple, le chauffage des caissons 20 de l'un des accumulateurs 12 peut être réalisé pendant une partie d'une nuit tandis que le chauffage des caissons 20 de l'autre accumulateur 14 peut être réalisé pendant une partie de la nuit suivante.

A titre d'example, la durée de mise en circulation du premier fluide caloporteur dans le circuit de distribution 22 est suffisamment importante pour que la totalité de la quantité du premier fluide caloporteur contenue dans le ballon 102 ait circulé dans l'accumulateur 12 ou 14.

En fonctionnement normal, la baisse de température du premier fluide caloporteur lorsqu'il revient dans le ballon 102, lors de la mise en circulation du premier fluide caloporteur dans les caissons 20, est réduite puisque la température de chaque caisson 20 est de préférence en fonctionnement normal proche de la température du premier fluide caloporteur fourni par le dispositif 16 de production d'énergie thermique. De ce fait, l'énergie nécessaire au chauffage du premier fluide caloporteur dans le ballon 102 est réduite.

Comme cela a été décrit précédemment, chaque caisson 20 occupe un volume réduit de sorte que le chauffage de chaque caisson 20 peut être réalisé avec une quantité d'énergie réduite. En particulier, l'énergie due au rayonnement solaire en hiver peut être suffisante pour effectuer le chauffage du premier fluide caloporteur dans le ballon 102 de sorte que la consommation électrique du chauffe-eau 100 peut être réduite.

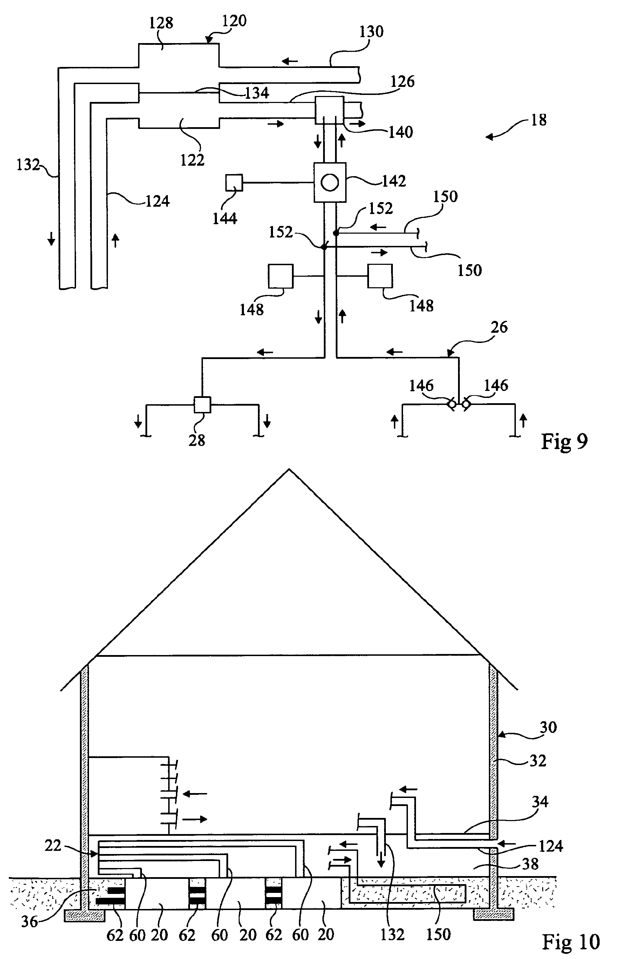

La figure 9 représente un mode de réalisation du dispositif 18 de consommation d'énergie thermique. Dans ce mode de réalisation, le dispositif 18 comprend un circuit d'aération 120 d'une habitation à ventilation double-flux. Le circuit d'aération 120 comprend un premier bloc de ventilation 122 qui aspire de l'air à l'extérieur de l'habitation par un conduit 124 et évacue cet air à l'intérieur de l'habitation par un conduit 126. Le circuit d'aération 120 comprend un deuxième bloc de ventilation 128 qui aspire de l'air à l'intérieur de l'habitation par un conduit 130 et évacue cet air à l'extérieur de l'habitation par un conduit 132. De façon connue pour une ventilation double-flux, l'air aspiré depuis l'extérieur est chauffé par l'air expulsé vers l'extérieur par l'intermédiaire d'un échangeur 134 de chaleur air-air.

Le conduit 126 de fourniture de l'air à l'intérieur de l'habitation peut se diviser en plusieurs conduits, non représentés, qui se terminent chacune par une bouche d'insufflation d'air dans l'habitation. Le conduit 130 d'aspiration de l'air à l'intérieur de l'habitation peut se diviser en plusieurs conduits, non représentés, qui se terminent chacune par une bouche d'extraction d'air dans l'habitation. Selon un mode de réalisation, chaque bouche d'insufflation est placée dans une pièce au haut d'un mur, près du plafond, et le flux d'air soufflé est de préférence orienté sensiblement horizontalement, notamment parallèlement au plafond. Selon un mode de réalisation, chaque bouche d'extraction est placée dans une pièce au bas d'un mur, près du plancher, par exemple à la verticale d'une fenêtre. De cette façon, un flux d'air chaud fourni dans une pièce et soufflé horizontalement près du plafond descend progressivement vers le bas de la pièce en entrainant l'air refroidi par la fenêtre et l'air froid présent au niveau du sol.

Le dispositif 18 de consommation d'énergie thermique comprend un échangeur 140 de chaleur relié au circuit de distribution 26. L'échangeur 140 de chaleur est un échangeur de chaleur liquide-air lorsque le deuxième fluide caloporteur est un liquide. L'échangeur 140 est installé sur le conduit 126 de fourniture de l'air soufflé à l'intérieur de l'habitation, c'est-à-dire en aval du premier bloc de ventilation 122 et de l'échangeur 134. L'air entraîné dans le conduit 126 est réchauffé par le deuxième fluide caloporteur au travers de l'échangeur 140. Ceci est avantageux dans la mesure où le réchauffement par l'échangeur 140 de l'air entraîné dans le conduit 126 peut entraîner une condensation d'eau qui serait néfaste au bon fonctionnement du deuxième bloc de ventilation 122.

Le deuxième fluide caloporteur peut être mis en circulation dans le circuit de distribution 26 par un circulateur hydraulique 142 commandé par un programmateur 144, comprenant par exemple un circuit électronique dédié. Le programmateur 144 peut comprendre un thermostat d'ambiance placé à l'intérieur de l'habitation. Le programmateur 144 peut alors être adapté à commander l'activation du circulateur hydraulique 142 en fonction de la température dans l'habitation mesuré par le thermostat d'ambiance. Le programmateur 144 est, en outre, adapté à commander le sélecteur 28 pour diriger le deuxième fluide caloporteur vers l'accumulateur 12 ou 14, non représenté. En figure 9, on a représenté sur le circuit de distribution 26 en aval des accumulateurs 12, 14 des clapets anti-retour 146 pour guider la circulation du deuxième fluide caloporteur en aval des accumulateurs 12 et 14 vers l'échangeur 140. Le circuit de distribution 26 peut comprendre des vases d'expansion 148 pour absorber la dilatation du deuxième fluide caloporteur.

A titre d'example, les programmateurs 144 et 112 sont adaptés à échanger des signaux entre eux. De préférence, lorsque le programmateur 112 commande le sélecteur 24 pour la mise en circulation du premier fluide caloporteur dans l'accumulateur 12, le programmateur 144 commande le sélecteur 28 pour la mise en circulation du deuxième fluide caloporteur dans l'accumulateur 14 et lorsque le programmateur 112 commande le sélecteur 24 pour la mise en circulation du premier fluide caloporteur dans l'accumulateur 14, le programmateur 144 commande le sélecteur 28 pour la mise en circulation du deuxième fluide caloporteur dans l'accumulateur 12.

Une conduite 150 supplémentaire de circulation du deuxième fluide caloporteur peut être prévue. La conduite 150 peut être reliée au réseau de distribution 26 par des sélecteurs 152, notamment des bipasses, qui sont éventuellement actionnables manuellement. La conduite 150 peut être en partie enterrée, notamment dans le sol 36 sous le vide sanitaire 38 de sorte que le deuxième fluide caloporteur circulant dans la conduite 150 supplémentaire est refroidi en cédant de l'énergie thermique au sol 36. La conduite supplémentaire 150 n'est alors de préférence pas au contact des caissons 20. Le deuxième fluide caloporteur peut être mis en circulation dans la conduite supplémentaire 150 par le circulateur 142 lorsque les sélecteurs 152 sont actionnés. La mise en circulation du deuxième fluide caloporteur dans la conduite supplémentaire 150 peut être réalisée pendant les saisons chaudes de façon à refroidir, par l'intermédiaire de l'échangeur 140, l'air entraîné dans la conduite 126 et soufflé dans l'habitation.

La figure 10 est une figure analogue à la figure 2 d'un autre mode de réalisation du dispositif de chauffage 10. En figure 10, on a représenté des caissons 20 de l'un des accumulateurs 12 et 14 et, de façon partielle, les conduites 62 et les conduites 60. On a, en outre, représenté la conduite 150 enterrée dans le sol 36 sous le vide sanitaire 38.

Selon un mode de réalisation, le conduit 124 d'aspiration de l'air depuis l'extérieur de l'habitation passe par le vide sanitaire 38. Les accumulateurs 12 et 14 étant disposés dans le vide sanitaire 38, ils tendent à réchauffer l'air ambiant dans le vide sanitaire 38. L'air extérieur aspiré dans le conduit 124 est alors avantageusement préchauffé lors de son passage dans le vide sanitaire 38.

Selon un mode de réalisation, le conduit 124 peut se diviser en entrant dans le vide sanitaire 38 en plusieurs conduits secondaires qui se rejoignent en sortie du vide sanitaire 38. Ceci permet de ralentir le débit d'air aspiré dans le vide sanitaire 38 et d'augmenter le réchauffement de l'air aspiré.

Selon un mode de réalisation, l'air entraîné par le conduit 132 d'évacuation est soufflé dans le vide sanitaire 38. Ceci peut entraîner une condensation de l'humidité de l'air dans le vide sanitaire 38, notamment en raison de la présence des accumulateurs 12, 14. En outre, une légère surpression peut être obtenue dans le vide sanitaire, ce qui favorise l'évacuation de l'air humide présent dans le vide sanitaire 38 vers l'extérieur par les orifices, non représentés, prévus de façon classique pour la ventilation du vide sanitaire 38.

Des modes de réalisation particuliers ont été décrits. Diverses variantes et modifications apparaîtront à l'homme de l'art.

## Revendications

1. Dispositif de chauffage (10) comprenant un premier accumulateur (12) de chaleur et un deuxième accumulateur (14) de chaleur, comportant chacun des caissons (20) de stockage d'énergie thermique, chaque caisson comprenant une enceinte isolante (40) contenant de la terre (66) traversée par au moins une première conduite (60) de circulation d'un premier fluide caloporteur et au moins une deuxième conduite (62) de circulation d'un deuxième fluide caloporteur, la première conduite comprenant une première extrémité (70) et une deuxième extrémité (72), les deuxièmes conduites des caissons du premier accumulateur étant connectées en série et les deuxièmes conduites des caissons du deuxième accumulateur étant connectées en série, le dispositif de chauffage comprenant un dispositif de fourniture d'énergie thermique (16) au premier fluide caloporteur relié aux premier et deuxième accumulateurs par un premier circuit de distribution (22) du premier fluide caloporteur comprenant des premier et deuxième éléments de fourniture du premier fluide caloporteur et des premier et deuxième éléments de réception du premier fluide caloporteur, les premières extrémités des premières conduites des caissons du premier accumulateur étant reliées en parallèle au premier élément de fourniture du premier fluide caloporteur, les deuxièmes extrémités des premières conduites des caissons du premier accumulateur étant reliées en parallèle au premier élément de réception du premier fluide caloporteur, les premières extrémités des premières conduites du deuxième accumulateur étant reliées en parallèle au deuxième élément de fourniture du premier fluide caloporteur et les deuxièmes conduites du deuxième accumulateur étant reliées en parallèle au deuxième élément de réception du premier fluide caloporteur, le premier circuit de distribution étant adapté à faire circuler de façon sélective le premier fluide caloporteur dans la première conduite de chaque caisson du premier accumulateur ou dans la première conduite de chaque caisson du deuxième accumulateur.

2. Dispositif de chauffage selon la revendication 1, comprenant un dispositif (18) de consommation d'énergie thermique du deuxième fluide caloporteur relié aux premier et deuxième accumulateurs (12, 14) par un deuxième circuit de distribution (26) du deuxième fluide caloporteur adapté à faire circuler de façon sélective le deuxième fluide caloporteur dans la deuxième conduite de chaque caisson (20) du premier accumulateur ou dans la deuxième conduite de chaque caisson du deuxième accumulateur.

3. Dispositif de chauffage selon la revendication 1 ou 2, dans lequel, dans chaque caisson (20), la première conduite (60) est agencée pour que le premier fluide caloporteur circule dans l'enceinte selon un premier parcours et la deuxième conduite (62) est agencée pour que le deuxième fluide caloporteur circule dans l'enceinte (40) selon un deuxième parcours opposé au premier parcours.

4. Dispositif de chauffage selon l'une quelconque des revendications 1 à 3, dans lequel chaque caisson (20) occupe un volume inférieur à 5 m³.

5. Dispositif de chauffage selon l'une quelconque des revendications 1 à 4, dans lequel chaque caisson (20) comprend une armature (50) comprenant des tiges (54) de support de la première conduite (60) et de la deuxième conduite (62) orientées radialement.

6. Dispositif de chauffage selon la revendication 5, dans lequel l'armature (50) comprend un tube (80) délimitant dans l'enceinte (40) un volume central (82) de terre et un volume périphérique (84) de terre, la première conduite (60) s'étendant majoritairement successivement dans le volume central et dans le volume périphérique et la deuxième conduite (62) s'étendant majoritairement successivement dans le volume périphérique et dans le volume central.

7. Dispositif de chauffage selon l'une quelconque des revendications 1 à 6, dans lequel, pour chaque caisson (20), la première conduite (60) et/ou la deuxième conduite (62) est au moins en partie disposée en spirale dans l'enceinte (40).

8. Dispositif de chauffage selon l'une quelconque des revendications 1 à 7, dans lequel le dispositif (16) de fourniture d'énergie thermique au premier fluide caloporteur comprend un chauffe-eau (100).

9. Dispositif de chauffage selon la revendication 2, dans lequel le dispositif (18) de consommation d'énergie thermique du deuxième fluide caloporteur comprend un conduit (126) de circulation d'air et un échangeur (140) de chaleur, entre le deuxième fluide caloporteur et l'air entraîné dans le conduit de circulation d'air, relié au deuxième circuit de distribution (26).

10. Dispositif de chauffage selon la revendication 9, dans lequel le dispositif (18) de consommation d'énergie thermique comprend un circuit d'aération (120) à ventilation double-flux destiné à équiper une habitation et comprenant un premier bloc de ventilation (122) adapté à aspirer de l'air depuis l'extérieur de l'habitation vers l'intérieur de l'habitation par ledit conduit (126) et un deuxième bloc de ventilation (128) adapté à aspirer de l'air depuis l'intérieur de l'habitation vers l'extérieur de l'habitation et un échangeur (134) de chaleur air-air entre l'air aspiré par le premier bloc de ventilation et l'air aspiré par le deuxième bloc de ventilation, l'échangeur de chaleur (140) entre le deuxième fluide caloporteur et l'air entraîné dans ledit conduit étant placé en aval du premier bloc de ventilation selon le sens de circulation de l'air dans ledit conduit.

11. Dispositif de chauffage selon la revendication 10, dans lequel le deuxième circuit de distribution (26) comprend un circulateur hydraulique (142) de mise en circulation du deuxième fluide caloporteur dans le deuxième circuit de distribution et un programmateur (144) adapté à commander le circulateur hydraulique et relié à un thermostat adapté à mesurer la température dans l'habitation.

12. Procédé de commande du dispositif de chauffage (10) selon l'une quelconque des revendications 1 à 11, comprenant la mise en circulation de façon sélective du premier fluide caloporteur dans la première conduite (60) de chaque caisson (20) du premier accumulateur (12) ou dans la première conduite de chaque caisson du deuxième accumulateur (14).

13. Procédé selon la revendication 12 de commande du dispositif de chauffage selon la revendication 2, comprenant la mise en circulation du deuxième fluide caloporteur seulement dans le premier accumulateur (12) lorsque le premier fluide caloporteur est mis en circulation seulement dans le deuxième accumulateur (14) et la mise en circulation du deuxième fluide caloporteur seulement dans le deuxième accumulateur lorsque le premier fluide caloporteur est mis en circulation seulement dans le premier accumulateur.

## Patentansprüche

1. Heizvorrichtung (10), die einen ersten Wärmeakkumulator (12) und einen zweiten Wärmeakkumulator (14) aufweist, die jeweils Wärmeenergiespeichercontainer (20) aufweisen, wobei jeder Container eine Isolierhülle (40) aufweist, die Erde (66) enthält, die von zumindest einer ersten Leitung (60) zur Zirkulation eines ersten Wärmeübertragungsströmungsmittels und durch mindestens eine zweite Leitung (62) zur Zirkulation eines zweiten Wärmeübertragungsströmungsmittels durchlaufen wird, wobei die erste Leitung ein erstes Ende (70) und ein zweites Ende (72) aufweist, wobei die zweiten Leitungen der Container des ersten Akkumulators in Reihe verbunden sind, und wobei die zweiten Leitungen der Container des zweiten Akkumulators in Reihe verbunden sind, wobei die Heizvorrichtung eine Vorrichtung (16) zur Wärmeenergielieferung zum ersten Wärmeübertragungsströmungsmittel aufweist, die mit den ersten und zweiten Akkumulatoren durch einen ersten Kreislauf (22) verbunden ist, um das erste Wärmeübertragungsströmungsmittel zu verteilen, wobei sie erste und zweite Elemente aufweist, um das erste Wärmeübertragungsströmungsmittel zu liefern und erste und zweite Elemente zum Aufnehmen des ersten Wärmeübertragungsströmungsmittels, wobei die ersten Enden der ersten Leitungen der Container des ersten Akkumulators parallel zum ersten Element angeschlossen sind, um das erste Wärmeübertragungsströmungsmittel zu liefern, wobei die zweiten Enden der ersten Leitungen der Container des ersten Akkumulators parallel mit dem ersten Element zum Aufnehmen des ersten Wärmeübertragungsströmungsmittels verbunden sind, wobei die ersten Enden der ersten Leitungen des zweiten Akkumulators parallel zu dem zweiten Element zum Liefern des ersten Wärmeübertragungsströmungsmittels angeschlossen sind, und wobei die zweiten Leitungen des zweiten Akkumulators parallel zu dem zweiten Element angeschlossen sind, um das erste Wärmeübertragungsströmungsmittel aufzunehmen, wobei der erste Verteilungskreislauf fähig ist, selektiv das erste Wärmeübertragungsströmungsmittel in der ersten Leitung von jedem Container des ersten Akkumulators oder in der ersten Leitung von jedem Container des zweiten Akkumulators zu zirkulieren.

2. Heizvorrichtung nach Anspruch 1, die eine Vorrichtung (18) zum Aufnehmen der Wärmeenergie des zweiten Wärmeübertragungsströmungsmittels aufweist, die mit den ersten und zweiten Akkumulatoren (12, 14) durch einen zweiten Kreislauf (26) verbunden ist, um das zweite Wärmeübertragungsströmungsmittel zu verteilen, welcher fähig ist, selektiv das zweite Wärmeübertragungsströmungsmittel in der zweiten Leitung von jedem Container (20) des ersten Akkumulators oder in der zweiten Leitung von jedem Container des zweiten Akkumulators zu zirkulieren.

3. Heizvorrichtung nach Anspruch 1 oder 2, wobei in jedem Container (20) die erste Leitung (60) so angeordnet ist, dass das erste Wärmeübertragungsströmungsmittel in der Hülle entlang einem ersten Pfad zirkuliert, und wobei die zweite Leitung (62) so angeordnet ist, dass das zweite Wärmeübertragungsströmungsmittel in der Hülle (40) entlang eines zweiten Pfades entgegengesetzt zum ersten Pfad zirkuliert.

4. Heizvorrichtung nach einem der Ansprüche 1 bis 3, wobei jeder Container (20) ein kleineres Volumen als 5 m³ aufweist.

5. Heizvorrichtung nach einem der Ansprüche 1 bis 4, wobei jeder Container (20) einen Rahmen (50) aufweist, der radiale Stangen (54) aufweist, um die erste Leitung (60) und die zweite Leitung (62) zu tragen.

6. Heizvorrichtung nach Anspruch 5, wobei der Rahmen (50) ein Rohr (80) aufweist, welches die Hülle (40) eines mittigen Volumens (82) aus Erde und eines umlaufenden Volumens (84) aus Erde begrenzt, wobei die erste Leitung (60) sich hauptsächlich sukzessive in das mittige Volumen und in das umlaufende Volumen erstreckt, und wobei die zweite Leitung (62) sich hauptsächlich sukzessive in das umlaufende Volumen und in das mittige Volumen erstreckt.

7. Heizvorrichtung nach einem der Ansprüche 1 bis 6, wobei bei jedem Container (20) die erste Leitung (60) und/oder die zweite Leitung (62) zumindest teilweise spiralförmig in der Umhüllung (40) angeordnet ist.

8. Heizvorrichtung nach einem der Ansprüche 1 bis 7, wobei die Vorrichtung (16) zum Liefern von Wärmeenergie an das erste Wärmeübertragungsströmungsmittel eine Wasserheizung (100) aufweist.

9. Heizvorrichtung nach Anspruch 2, wobei die Vorrichtung (18) zum Aufnehmen der Wärmeenergie von dem zweiten Wärmeübertragungsströmungsmittel eine Luftflussleitung (126) und einen Wärmeübertrager (140) zwischen dem zweiten Wärmeübertragungsströmungsmittel und der Luft aufweist, die in der Luftflussleitung geleitet wird, und zwar verbunden mit dem zweiten Verteilungskreislauf (26).

10. Heizvorrichtung nach Anspruch 9, wobei die Wärmeenergieverbrauchsvorrichtung (18) einen Dual-Flussventilationskreislauf (120) aufweist, der vorgesehen ist, um ein Haus zu versorgen, und wobei sie einen ersten Ventilationsblock (122) aufweist, der Luft von außerhalb des Hauses zur Innenseite des Hauses durch die Leitung (126) saugen kann, und einen zweiten Ventilationsblock (128), der Luft von der Innenseite des Gehäuses zur Außenseite des Gehäuses saugen kann, und einen Luft-Luft-Wärmetauscher bzw. Luft-Luft-Wärmeübertrager (134) zwischen der Luft, die von dem ersten Ventilationsblock hereingesaugt wird, und der Luft, die von dem zweiten Ventilationsblock hereingesaugt wird, wobei der Wärmeübertrager (140) zwischen dem zweiten Wärmeübertragungsströmungsmittel und der Luft, die in der Leitung geleitet wird, gemäß der Luftflussrichtung in der Leitung stromabwärts des ersten Ventilationsblockes angeordnet ist.

11. Heizvorrichtung nach Anspruch 10, wobei der zweite Verteilungskreislauf (26) einen Hydraulikumwälzer bzw. eine hydraulische Zirkulationspumpe (142) aufweist, um das zweite Wärmeübertragungsströmungsmittel in dem zweiten Verteilungskreislauf zu zirkulieren, und eine Programmier- bzw. Steuervorrichtung (144), welche die Hydraulikzirkulationsvorrichung steuern kann und mit einem Thermostat verbunden ist, welcher die Temperatur in dem Haus messen kann.

12. Verfahren zum Steuern der Vorrichtung (10) nach einem der Ansprüche 1 bis 11, welches aufweist, selektiv das erste Wärmeübertragungsströmungsmittel in der ersten Leitung (60) von jedem Container (20) des ersten Akkumulators (12) oder in der ersten Leitung von jedem Container des zweiten Akkumulators (14) zu zirkulieren.

13. Verfahren nach Anspruch 12 zum Steuern der Heizvorrichtung nach Anspruch 2, welches aufweist, das zweite Wärmeübertragungsströmungsmittel nur in den ersten Akkumulator (12) zu zirkulieren, wenn das erste Wärmeübertragungsströmungsmittel nur in dem zweiten Akkumulator (14) zirkuliert wird, und das zweite Wärmeübertragungsströmungsmittel nur in dem zweiten Akkumulator zu zirkulieren, wenn das erste Wärmeübertragungsströmungsmittel nur in dem ersten Akkumulator zirkuliert wird.

## Claims

1. A heating device (10) comprising a first heat accumulator (12) and a second heat accumulator (14), each comprising thermal energy storage containers (20), each container comprising an insulating enclosure (40) containing earth (66) crossed by at least one first line (60) for the circulation of a first heat transfer fluid and at least one second line (62) for the circulation of a second heat transfer fluid, the first line comprising a first end (70) and a second end (72), the second lines of the containers of the first accumulator being series-connected and the second lines of the containers of the second accumulator being series-connected, the heating device comprising a device (16) of thermal energy delivery to the first heat transfer fluid connected to the first and second accumulators by a first circuit (22) for distributing the first heat transfer fluid comprising first and second elements for delivering the first heat transfer fluid and first and second elements for receiving the first heat transfer fluid, the first ends of the first lines of the containers of the first accumulator being connected in parallel to the first element for delivering the first heat transfer fluid, the second ends of the first lines of the containers of the first accumulator being connected in parallel to the first element for receiving the first heat transfer fluid, the first ends of the first lines of the second accumulator being connected in parallel to the second element for delivering the first heat transfer fluid and the second lines of the second accumulator being connected in parallel to the second element for receiving the first heat transfer fluid, the first distribution circuit being capable of selectively circulating the first heat transfer fluid in the first line of each container of the first accumulator or in the first line of each container of the second accumulator.

2. The heating device of claim 1, comprising a device (18) for consuming the thermal energy of the second heat transfer fluid connected to the first and second accumulators (12, 14) by a second circuit (26) for distributing the second heat transfer fluid capable of selectively circulating the second heat transfer fluid in the second line of each container (20) of the first accumulator or in the second line of each container of the second accumulator.

3. The heating device of claim 1 or 2, wherein, in each container (20), the first line (60) is arranged so that the first heat transfer fluid circulates in the enclosure along a first path and the second line (62) is arranged so that the second heat transfer fluid circulates in the enclosure (40) along a second path opposite to the first path.

4. The heating device of any of claims 1 to 3, wherein each container (20) takes up a volume smaller than 5 m³.

5. The heating device of any of claims 1 to 4, wherein each container (20) comprises a frame (50) comprising radial rods (54) for supporting the first line (60) and the second line (62).

6. The heating device of claim 5, wherein the frame (50) comprises a pipe (80) delimiting in the enclosure (40) a central volume (82) of earth and a peripheral volume (84) of earth, the first line (60) mainly extending successively in the central volume and in the peripheral volume and the second line (62) mainly extending successively in the peripheral volume and in the central volume.

7. The heating device of any of claims 1 to 6, wherein, for each container (20), the first line (60) and/or the second line (62) is at least partly arranged in a spiral in the enclosure (40).

8. The heating device of any of claims 1 to 7, wherein the device (16) for delivering thermal energy to the first heat transfer fluid comprises a water heater (100).

9. The heating device of claim 2, wherein the device (18) for consuming the thermal energy of the second heat transfer fluid comprises an air flow duct (126) and a heat exchanger (140) between the second heat transfer fluid and the air conducted in the air flow duct, connected to the second distribution circuit (26).

10. The heating device of claim 9, wherein the thermal energy consumption device (18) comprises a double-flow ventilation circuit (120) intended to equip a house and comprising a first ventilation block (122) capable of sucking in air from the outside of the house to the inside of the house through said duct (126) and a second ventilation block (128) capable of sucking in air from the inside of the house to the outside of the house and an air-air heat exchanger (134) between the air sucked in by the first ventilation block and the air sucked in by the second ventilation block, the heat exchanger (140) between the second heat transfer fluid and the air conducted in said duct being placed downstream of the first ventilation block according to the air flow direction in said duct.

11. The heating device of claim 10, wherein the second distribution circuit (26) comprises a hydraulic circulator (142) for circulating the second heat transfer fluid in the second distribution circuit and a programmer (144) capable of controlling the hydraulic circulator and connected to a thermostat capable of measuring the temperature in the house.

12. A method for controlling the device (10) of any of claims 1 to 11, comprising selectively circulating the first heat transfer fluid in the first line (60) of each container (20) of the first accumulator (12) or in the first line of each container of the second accumulator (14).

13. The method of claim 12 for controlling the heating device of claim 2, comprising circulating the second heat transfer fluid in the first accumulator (12) alone when the first heat transfer fluid is circulated in the second accumulator (14) alone and circulating the second heat transfer fluid in the second accumulator alone when the first heat transfer fluid is circulated in the first accumulator alone.
